## Europäisches Patentamt

(19) **European Patent Office**

**Office européen des brevets**

(11) Veröffentlichungsnummer: **0 011 750**
**B1**

(12) **EUROPÄISCHE PATENTSCHRIFT**

(45) Veröffentlichungstag der Patentschrift:
**12.05.82**

(51) Int. Cl.³: **H 04 Q 3/00**

(21) Anmeldenummer: **79104404.3**

(22) Anmeldetag: **08.11.79**

(54) Schaltungsanordnung zum Ermitteln des Belegungszustands einer Fernsprechleitung.

(30) Priorität: **30.11.78 DE 2851848**

(43) Veröffentlichungstag der Anmeldung:
**11.06.80 Patentblatt 80/12**

(45) Bekanntmachung des Hinweises auf die Patenterteilung:
**12.05.82 Patentblatt 82/19**

(84) Benannte Vertragsstaaten:
**AT BE CH NL SE**

(56) Entgegenhaltungen:
**FR-A-2 275 098**
**FR-A-2 324 181**
**US-A-4 054 941**

(73) Patentinhaber: **SIEMENS AKTIENGESELLSCHAFT**
**Berlin und München, Postfach 22 02 61,**
**D-8000 München 22 (DE)**

(72) Erfinder: **Fuchs, Ernst ALfred, Dipl.-Ing., Forstenrieder**
**Allee 6, D-8000 München 71 (DE)**

## Schaltungsanordnung zum Ermitteln des Belegungszustands einer Fernsprechleitung

Die Erfindung bezieht sich auf eine Schaltungsanordnung zum Ermitteln des Belegungszustands einer Fernsprechleitung einer Teilnehmerstelle, mit einem Differenzverstärker, der ein dem Schleifenstrom in der Fernsprechleitung zugeordnetes Steuersignal erzeugt, und mit einem optoelektronischen Koppelelement, welches das von dem Differenzverstärker abgegebene Steuersignal aufnimmt und von seinem Ausgang ein den Belegungszustand anzeigendes Signal abgibt.

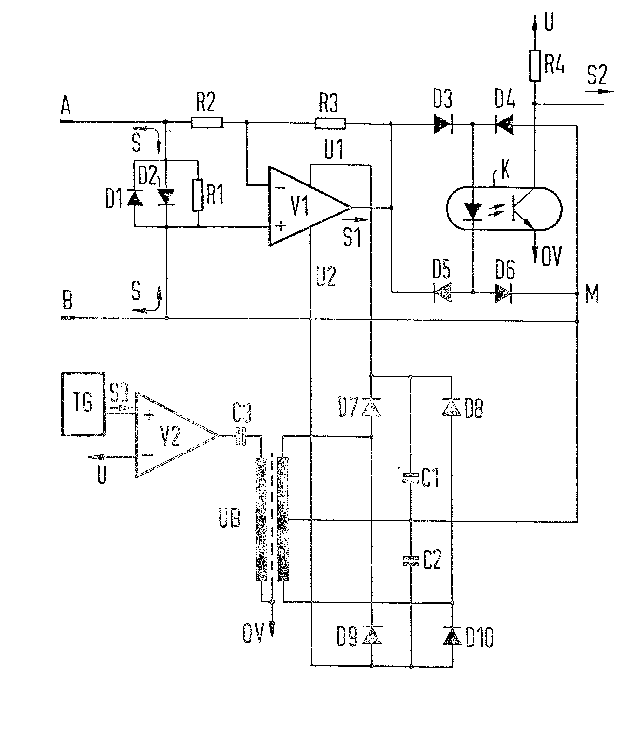

Eine Schaltungsanordnung der vorstehend betrachteten Art ist bereits bekannt (US-A-054 941, Fig. 4). Von Nachteil bei dieser bekannten Schaltungsanordnung ist jedoch, daß zwischen dem Ausgang des dort vorgesehenen Differenzverstärkers und dem Steuereingang des optoelektronischen Koppelelements eine relativ aufwendige Steuerschaltung erforderlich ist, zu der unter anderem zwei Differenzverstärker gehören. Diese beiden Differenzverstärker sind dabei Teil zweier Schwellwertschaltungen, mit deren Hilfe die Schwellwerte eingestellt werden, bei deren Überschreiten durch den zu überwachenden Schleifenstrom ein entsprechendes Ausgangssignal abzugeben ist.

Der Erfindung liegt daher die Aufgabe zugrunde, eine Schaltungsanordnung der eingangs genannten Art so auszubilden, daß mit geringerem schaltungstechnischen Aufwand ausgekommen werden kann, um ein den Belegungszustand einer Fernsprechleitung einer Teilnehmerstelle anzeigendes Signal abzugeben.

Gelöst wird die vorstehend aufgezeigte Aufgabe bei einer Schaltungsanordnung der eingangs genannten Art erfindungsgemäß dadurch, daß das optoelektronische Koppelelement in einer Diagonalen einer aus Dioden gebildeten Brückenschaltung angeordnet ist, deren anderer Diagonalen das von dem Differenzverstärker abgegebene Steuersignal zugeführt ist, und daß das den Belegungszustand anzeigende Signal in dem Fall auftritt, daß ein dem Schleifenstrom entsprechendes, dem Differenzverstärker zugeführtes Signal einen durch den Verstärkungsfaktor des Differenzverstärkers und die Durchlaßspannung der Dioden der Brückenschaltung festgelegten Schwellwert überschreitet.

Die Erfindung bringt den Vorteil eines besonders geringen schaltungstechnischen Aufwands gegenüber der oben betrachteten bekannten Schaltungsanordnung mit sich. So ist es lediglich erforderlich, zwischen dem Ausgang des Differenzverstärkers und dem optoelektronischen Koppelelement eine aus Dioden aufgebaute Brückenschaltung vorzusehen, also nur relativ wenige Bauelemente vorzusehen. Überdies legt die Durchlaßspannung der betreffenden Dioden in Verbindung mit dem Verstärkungsfaktor des Differenzverstärkers den Schwellwert fest, bei dessen Überschreiten durch ein dem Schleifenstrom der Fernsprechleitung entsprechendes Signal ein den Belegungszustand der Fernsprechleitung anzeigendes Signal abgegeben wird. Dies bedeutet aber, daß im Gegensatz zu der betrachteten bekannten Schaltungsanordnung im vorliegenden Fall ohne die Verwendung von gesonderten Schwellwerterzeugungseinrichtungen ausgekommen wird.

Anhand einer Zeichnung wird nachstehend ein Ausführungsbeispiel der Erfindung näher erläutert.

Über zwei Anschlußpunkte A und B ist die Schaltungsanordnung mit einer Fernsprechleitung verbunden. Ein Schleifenstrom S fließt durch einen Widerstand R1, der beispielsweise einen Widerstandswert von 3,3 Ohm aufweist. Der Widerstand R1 kann dabei, entsprechend der Richtung des Schleifenstroms S, in beiden Richtungen durchflossen werden. Die an dem Widerstand R1 abfallende Spannung wird über den Wiederstand R2 dem Differenzverstärker V1 zugeführt. In Abhängigkeit von der Richtung des Schleifenstroms S nimmt ein am Ausgang des Differenzverstärkers V1 abgegebenes Steuersignal S1, bezogen auf den Mittelpunkt M der Schaltungsanordnung, positive oder negative Polarität an. Die Verstärkung des Differenzverstärkers V1 und damit die Amplitude des Steuersignals S1 wird durch einen Gegenkopplungswiderstand R3 und den Widerstand R2 festgelegt. Das Steuersignal S1 liegt an einer ersten Diagonalen einer aus Dioden D3 bis D6 gebildeten Brückenschaltung an. An der zweiten Diagonalen ist die Eingangsseite eines optoelektronischen Koppelelements K angeschlossen. Wenn das Steuersignal S1 positive Polarität annimmt, fließt ein Strom über die Diode D3, über eine im optoelektronischen Koppelelement K vorgesehene Leuchtdiode und die Diode D6 zum Mittelpunkt M. Wenn das Steuersignal S1 negative Polarität annimmt, fließt ein Strom vom Mittelpunkt M über die Diode D4, die Leuchtdiode und die Diode D5 zum Differenzverstärker V1. Die Leuchtdiode steuert damit unabhängig von der Polarität des Steuersignals S1 und damit unabhängig von der Richtung des Schleifenstroms S einen im optoelektronischen Koppelement K vorgesehenen Phototransistor leitend. Am Kollektor des Phototransistors wird damit ein dem Steuersignal S1 entsprechendes Signal S2 abgegeben, wenn bei einer Belegung der Fernsprechleitung ein Schleifenstrom S fließt. Der Kollektor des Phototransistors ist über einen Widerstand R4 mit einer Betriebsspannung U eines das Signal S2 auswertenden Geräts verbunden. Ein derartiges Gerät ist beispielsweise ein Modem, unter dessen Verwendung Daten über die Fernsprechleitung übertragen werden.

Am Differenzverstärker V1 liegen eine positive Versorgungsspannung U1 und eine negative Versorgungsspannung U2 an. Da der Eingang und der Ausgang der Schaltungsanordnung galvanisch voneinander getrennt sein sollen, muß das Bezugspotential dieser beiden Versorgungsspannungen U1 und U2 verschieden sein vom Bezugspotential der Betriebsspannung U. Die Erzeugung der Versorgungsspannungen U1 und U2 erfolgt daher zweckmäßigerweise unter Verwendung eines Gegentaktwandlers. Der Gegentaktwandler wird aus einem Übertrager UB gebildet, dem primärseitig Signale mit vorgegebener Folgefrequenz zugeführt werden. Die sekundärseitig induzierten Signale werden durch eine aus Dioden D7 bis D9 gebildete Brückenschaltung gleichgerichtet und durch zwei Kondensatoren C1 und C2 integriert. Die Spannungen an den Kondensatoren C1 und C2 stellen die Versorgungsspannungen U1 und U2 dar.

Falls die Auswertung der Signale S2 in einem Modem erfolgt, der mit einem eigenen Taktgeber versehen ist, werden von diesem Taktgeber TG abgegebene Signale S3 einem Differenzverstärker V2 zugeführt, der die Signale verstärkt und über einen Kondensator C3 an die Primärwicklung des Übertragers UB abgibt. Falls ein derartiger Taktgeber TG nicht vorgesehen ist, kann der Differenzverstärker V2 auch in bekannter Weise als Oszillator oder astabiler Multivibrator betrieben werden. Die Versorgungsspannungen dieses Differenzverstärkers V2 haben das gleiche Bezugspotential wie die Betriebsspannung U.

## Patentanspruch

Schaltungsanordnung zum Ermitteln des Belegungszustands einer Fernsprechleitung (A, B) einer Teilnehmerstelle, mit einem Differenzverstärker (V1), der ein dem Schleifenstrom in der Fernsprechleitung zugeordnetes Steuersignal (S1) erzeugt, und mit einem optoelektronischen Koppelelement (K), welches das von dem Differenzverstärker (V1) abgegebene Steuersignal (S1) aufnimmt und von seinem Ausgang ein den Belegungszustand anzeigendes Signal (S2) abgibt, dadurch gekennzeichnet, daß das optoelektronische Koppelelement (K) in einer Diagonalen einer aus Dioden (D3 bis D6) gebildeten Brückenschaltung angeordnet ist, deren anderer Diagonalen das von dem Differenzverstärker (V1) abgegebene Steuersignal (S1) zugeführt ist, und daß das den Belegungszustand anzeigende Signal (S2) in dem Fall auftritt, daß ein dem Schleifenstrom entsprechendes, dem Differenzverstärker (V1) zugeführtes Signal einen durch den Verstärkungsfaktor des Differenzverstärkers (V1) und die Durchlaßspannung der Dioden (D3 bis D6) der Brückenschaltung festgelegten Schwellwert überschreitet.

## Claim

Circuit arrangement for determining the operating state of a telephone line (A, B) of a subscriber station, comprising a differential amplifier (V1) which produces a control signal (S1) assigned to the loop current in the telephone line, and an opto-electronic coupling element (K) which receives the control signal (S1) emitted by the amplifier (V1) and emits at its output a signal which indicates the operating state, characterised in that the opto-electronic coupling element (K) is arranged in a diagonal arm of a bridge circuit formed by diodes (D3 to D6), and the control signal (S1) emitted by the differential amplifier (V1) is applied across the other diagonal arm, the signal (S2) indicating the engaged state occuring if a signal which corresponds to the loop current and is supplied to the differential amplifier (V1) exceeds a threshold value which is determined by the amplification factor of the differential amplifier (V1) together with the forward voltage of the diodes (D3 to D6) of the bridge circuit.

## Revendication

Montage pour déterminer l'état d'occupation d'une ligne téléphonique (A, B) d'un poste d'abonné, comportant un amplificateur différentiel (V1) produisant un signal de commande (S1) associé au courant de boucle dans la ligne téléphonique, ainsi qu'un élément de couplage optoélectronique (K) recevant le signal fourni par l'amplificateur différentiel (V1) et émettant à sa sortie un signal (S2) indiquant l'état d'occupation, caractérisé par le fait que l'élément de couplage optoélectronique (K) est disposé dans une diagonale d'un montage en pont constitué par des diodes (D3 à D6), dont l'autre diagonale reçoit le signal de commande (S1) émis par l'amplificateur différentiel (V1), et que le signal (S2) indiquant l'état d'occupation apparaît dans le cas où un signal appliqué à l'amplificateur différentiel (V1) et correspondant au courant de boucle dépasse une valeur de seuil déterminée par le facteur d'amplification de l'amplificateur différentiel (V1) et par la tension directe des diodes (D3 à D6) du montage en pont.